# EUROPÄISCHE PATENTSCHRIFT

(11) **EP 1 511 817 B1**
(45) Veröffentlichungstag und Bekanntmachung des Hinweises auf die Patenterteilung: **07.06.2006**
(21) Anmeldenummer: 03732433.2
(22) Anmeldetag: 21.05.2003
(51) Int. Cl.: C09D 151/00, C08F 265/00

(54) **STRAHLUNGSHÄRTBARE WÄSSRIGE DISPERSIONEN**
RADIATION CURABLE AQUEOUS DISPERSIONS
DISPERSIONS AQUEUSES DURCISSABLES PAR RAYONNEMENT

(30) Priorität: 27.05.2002 DE 10223614
(43) Veröffentlichungstag der Anmeldung: 09.03.2005
(73) Patentinhaber: BASF Aktiengesellschaft, 67056 Ludwigshafen (DE)
(72) Erfinder: LEUNINGER, Jörg, 55129 Mainz (DE); PAULUS, Wolfgang, 55270 Ober-Olm (DE); MÜLLER, Anke, 67346 Speyer (DE)
(86) Internationale Anmeldenummer: PCT/EP2003/005311
(87) Internationale Veröffentlichungsnummer: WO 2003/099949

(56) Entgegenhaltungen:
- EP-A- 0 736 573
- EP-A- 1 197 503
- EP-A- 1 197 532
- US-A- 5 990 228

## Beschreibung

Die vorliegende Erfindung betrifft die Herstellung und Verwendung von wässrigen strahlungshärtbaren Polymerdispersionen zur Beschichtung von Substraten.

In der Strahlungshärtung werden zur Vermeidung des Umgangs mit Monomeren zunehmend wässrige Polymerdispersionen eingesetzt. Derartige Systeme eignen sich hervorragend zur Beschichtung offenporiger Substrate, insbesondere Papier und Holz. Vorwiegend werden wässrige Emulsionen unsgesättigter Polyester oder Polyester(meth)-acrylate verwendet. Nachteilig bei diesen Systemen ist jedoch ihr flüssiger Charakter, der nach dem Abdunsten des Wassers häufig zu klebrigen Filmen führt. Dies verursacht insbesondere bei der Strahlungshärtung dreidimensionaler Beschichtungsobjekte Probleme, da in den Schattenbereichen keine Aushärtung erfolgt und somit klebrige Stellen zurückbleiben. Deswegen wurden Polyurethandispersionen mit UV-härtbaren Gruppen entwikkelt. Diese sind klebfrei nach Verfilmung. Bei diesen Dispersionen handelt es sich ausschließlich um Sekundärdispersionen, die in ihrer Kostenstruktur sehr hoch liegen. Verwendet man preisgünstige aromatische Isocyanate z.B. TDI, so weisen die aus den Dispersionen hergestellten Filme eine hohe Vergilbungsneigung auf, die weiß pigmentierte Anwendungen ausschließen.

Neben der Klebfreiheit ist die Lösemittel- und Filmbildehilfsmittelfreiheit derartiger Beschichtungssysteme aus ökologischer Sicht wünschenswert. Zudem werden für eine Vielzahl von Anwendungen hohe Oberflächenhärten der Beschichtungen gefordert.

Aus der EP 486 278 sind strahlungshärtbare wässrige Dispersionen bekannt, welche aus Mischungen eines nicht strahlungshärtbaren Emulsionspolymerisates (Tg < 28°C) und eines strahlungshärtbaren (Meth)acrylsäureesters bestehen.

EP 624 610 beschreibt vergleichbare Systeme, wobei allerdings das Emulsionspolymerisat zwingend eine Tg > 30°C aufweisen muß.

EP 232 016 beschreibt Emulsionspolymerisate, die zwingend eine Vorvernetzung aufweisen (Gelanteil >1 %). Die Polymerisate werden durch Abmischen mit einer mehrfach ungesättigten Verbindung oder aber durch Copolymerisation mit Vernetzern mit unterschiedlicher Reaktivität strahlungshärtbar ausgerüstet.

EP 736 573 beschreibt mehrstufige Emulsionspolymerisate, die durch Abmischen mit einem mehrfach ungesättigten (Meth)acrylsäureester strahlungshärtbar ausgestattet sind.

Mit diesen Dispersionen aus dem Stand der Technik können die oben gestellten Anforderungen jedoch nicht zufriedenstellend erfüllt werden.

Aufgabe der vorliegenden Erfindung war es, lagerstabile wässrige strahlungshärtbare Polymerdispersionen bereitzustellen, die lösemittelfrei formulierbar sind und die zu klebfreien Beschichtungen vor der Strahlungshärtung und zu Beschichtungen mit hoher Härte nach der Strahlungshärtung führen.

Die Aufgabe wurde gelöst durch wässrige Polymerdispersionen, enthaltend
a) 50-70 Gew.-% Polymerteilchen, bestehend aus mindestens zwei unterschiedlichen (Co)polymeren mit Glastemperaturen jeweils oberhalb 50°C, welche aufgebaut sind aus
   mind. 80 Gew.-% mindestens eines Hauptmonomeren,
   0,1 - 10 % mindestens eines Hilfsmonomeren, sowie
   0 - 3 Gew.-% mindestens eines Vernetzermoleküls,
   wobei die Differenz der Glasübergangstemperaturen (Tg) der unterschiedlichen Polymere mindestens 10°C beträgt, und
b) 30 - 50 Gew.-% mindestens eines multifunktionellen (Meth)acrylates,
wobei die Dispersion a) einer physikalischen und/oder chemischen Desodorierung unterworfen wird.

Die erfindungsgemäßen Polymerdispersionen enthalten 50 - 70 Gew.-% Polymerteilchen und 30 - 50 Gew.-% multifunktionelles (Meth)acrylat b), so daß die Summe daraus 100 Gew.-% ergibt.

Selbstverständlich enthalten die erfindungsgemäßen Polymerdispersionen auch Wasser, in dem die Polymerteilchen dispergiert sind.

Bevorzugt enthalten die wässrigen Polymerdispersionen 55 - 65 Gew.-% a) und 35 - 45 Gew.-% b) und besonders bevorzugt 60 - 65 Gew.-% a) und 35 - 40 Gew.-% b).

Die aus der Dispersion gewonnenen Beschichtungen sind klebfrei vor der UV-Härtung und weisen eine hohe Oberflächenhärte nach der Strahlungshärtung auf.

Die erfindungsgemäßen Dispersionen sind lagerstabil, d.h. bei einer Lagerung bei 50°C über 14 Tage und bei Lagerung bei Raumtemperatur über ein halbes Jahr ist keine Veränderung festzustellen. Die erfindungsgemäßen Dispersionen sind bei unter 20°C auch ohne Filmbildehilfsmittel verfilmbar, die mit den Dispersionen erhältlichen Beschichtungen sind vor der W-Härtung klebfrei und weisen nach der Strahlungshärtung eine hohe Oberflächenhärte und hohe Chemikalienresistenz auf.

Die (Co)Polymere, die die Polymerteilchen in a) bilden, setzen sich jeweils aus mindestens 80 Gew.-% mindestens eines Hauptmonomeren, 0,1 bis 10 Gew.-% mindestens eines Hilfsmonomeren und 0 bis 3 Gew.-% mindestens eines Vernetztermoleküls zusammen, mit der Maßgabe, daß die Summe 100 Gew.-% ergibt.

Darin sind Hauptmonomere beispielsweise (Meth)acrylsäuremethylester, (Meth)acrylsäureethylester, (Meth)acrylsäure-n-propylester, (Meth)acrylsäure-n-butylester, (Meth)acrylsäure-*iso*-butylester, (Meth) acrylsäure-*sek*-butylester, (Meth)acrylsäure-n-pentylester, (Meth)acrylsäure-*iso*-pentylester, (Meth)acrylsäure-2-methyl-butylester, (Meth) acrylsäureamylester, (Meth)acrylsäure-n-hexylester, (Meth)acrylsäure-2-ethylbutylester, (Meth)acrylsäurepentylester, (Meth)acrylsäure-n-heptylester, (Meth)acrylsäure-n-octylester, (Meth)acrylsäure-2-ethylhexylester, (Meth)acrylsäure-n-decylester, (Meth)acrylsäureundecylester, (Meth)acrylsäure-n-dodecylester, (Meth)acrylsäure-2-methoxyethylester, (Meth)acrylsäure-2-ethoxyethylester, (Meth)acrylsäure-4-methoxybutylester, (Meth)acrylsäure-2-(2'-methoxyethoxy-)ethylester, Vinylchlorid, Vinylidenchlorid, Vinylacetat, Vinylpropionat, Vinylbutyrat, Methylvinylketon, Vinyltoluol, Vinylnaphthalin, Methylvinylether, Ethylvinylether, *n*-Propylvinylether, *iso*-Propylvinylether, *n*-Butylvinylether, *sek*-Butylvinylether, *iso*-Butylvinylether, *tert*-Butylvinylether, *n*-Octylvinylether, Ethylen, Propylen, 1-Buten, 2-Buten, iso-Buten, Cyclopenten, Cyclohexen, Cyclododecen, Butadien, Isopren, Chloropren, Styrol, α-Methylstyrol, *tert*.-Butylstyrol sowie Gemische davon.

Bevorzugte Hauptmonomere sind Methylmethacrylat, n-Butylacrylat, Ethylhexylacrylat und die genannten Vinylaromaten, besonders bevorzugt sind Methylmethacrylat, n-Butylacrylat und Ethylhexylacrylat.

Hilfsmonomere sind z.B. funktionalisierte Monomere, wie beispielsweise solche, die Carboxyl-, Hydroxyl-, Epoxy-, Allyl-, Carbonsäureamid-, Amin-, Isocyanat-, Hydroxymethyl-, Methoxymethyl- oder Silyloxygruppen tragen. Dies können beispielsweise sein (Meth)acrylsäure, (Meth)acrylsäureformal, (Meth)acrylsäure-hydroxymethylester, (Meth)acrylsäure-2-hydroxyethylester, (Meth)acrylsäure-2-hydroxypropylester, (Meth)acrylsäure-3-hydroxypropylester, (Meth)acrylsäure-4-hydroxybutylester, 4-Hydroxybutylvinylether, (Meth)acrylsäurebenzophenonglycidylester, (Meth)acrylsäure-2-sulfoethylester, (Meth)acrylamid, N-Methylol(meth)acrylamid, Fumarsäure, Fumarsäuremono-*iso-*propylester, Fumarsäuremono-*n*-hexylester, Fumarsäureamid, Fumarsäurediamid, Fumarsäurenitril, Fumarsäuredinitril, Crotonsäure, Crotonsäureglycidylester, Itaconsäure, Itaconsäurehalbester, Itaconsäureanhydrid, Citraconsäure, Citraconsäurehalbester, Citraconsäureanhydrid, Bernsteinsäure, Maleinsäure, Maleinsäuremonomethylester, Maleinsäuremonoethylester, Maleinsäuremonobutylester, Maleinsäureanhydrid, Maleinsäureamid, Maleinsäurediamid, N-Methylolmaleinsäureamid, Vinylsuccinimid, Vinylimidazol, 2-Vinylpyridin, 4-Vinylpyridin, N-Vinylpyrrolidon, N-Vinylpiperidon, N-Vinylcaprolactam, Natriumvinylsulfonat, Tetraallyloxyethan, Diallylphthalat, Diallylsuccinat, Tetraallylethan, Tetraallyloxysilan, Allylglycidylether, Ureido(meth)acrylat, Triallylcyanurat, Triallylisocyanurat, Diketen, monoethylenisch ungesättigten Carbonsäuren mit 3 bis 8 C-Atomen sowie deren wasserlöslichen Alkalimetall-, Erdalkalimetall- oder Ammoniumsalze wie beispielsweise: Acrylsäure, Methacrylsäure, Dimethylacrylsäure, Ethacrylsäure, Maleinsäure, Citraconsäure, Methylenmalonsäure, Crotonsäure, Fumarsäure, Mesaconsäure, Itaconsäure, Maleinsäure, Allylessigsäure, Vinylessigsäure sowie Gemische davon.

Bevorzugte Hilfsmonomere sind Methacrylsäure, Acrylsäure, Acrylamid, (Meth)acrylsäure-2-hydroxyethylester, (Meth)acrylsäure-2-hydroxypropylester, (Meth)acrylsäure-3-hydroxypropylester, (Meth)acrylsäure-4-hydroxybutylester und 4-Hydroxybutylvinylether, besonders bevorzugt sind Acrylsäure, Methacrylsäure, Acrylamid und Hydroxyethylacrylat.

Vernetzermoleküle sind solche polymerisierbaren Verbindungen mit mehr als einer polymerisierbaren Doppelbindung, beispielsweise Vinylether- oder (Meth)acrylatgruppen. Als Beispiele genannt seien 1,4-Butandioldiacrylat, Allylmethacrylat, Ethylenglykol(meth)acrylat, Propylenglykol(meth)acrylat, 1,6-Hexandioldi(meth)acrylat, 1,2-Ethylenglykoldi(meth)acrylat, 1,2-Neopentylglykoldi(meth)acrylat, Diethylenglykoldi(meth)acrylat, Triethylenglykoldi(meth)acrylat, Tetraethylenglykoldi(meth)acrylat, Trimethylolpropantri(meth)acrylat, Trimethylolethantri(meth)acrylat, Pentaerythritoltri- und -tetra(meth)acrylat und Divinylbenzol.

Die mindestens zwei unterschiedlichen (Co)polymere, aus denen die Polymerteilchen aufgebaut sind, werden so ausgewählt, daß die Polymere Glasübergangstemperaturen oberhalb 50°C aufweisen und die Differenz der Glastemperaturen mind. 10°C beträgt.

Die Glasübertragungstemperatur läßt sich nach üblichen Methoden wie Differentialthermoanalyse oder Differential Scanning Calorimetrie (DSC-Methode, bevorzugt nach der ASTM 3418/82, sog. "midpoint temperature") bestimmen.

Die (Co)Polymerisation kann in dem Fachmann an sich bekannter Weise durchgeführt werden, z.B. als Masse-, Emulsions-, Miniemulsions-, Suspensions-, Lösungs-, Fällungs-, Wasser-in-Öl-Emulsions-, umgekehrte Suspensionspolymerisation oder Mikrosuspensionspolymerisation. Bevorzugt ist die Fällungs-, Suspensions-, Lösungs- und die Emulsionspolymerisation, besonders bevorzugt die Emulsionspolymerisation.

Die Polymerisation kann sowohl radikalisch, anionisch, kationisch oder koordinativ erfolgen, bevorzugt radikalisch.

Eine häufige, aber nicht die einzige Methode zur Herstellung der angeführten (Co)Polymerisate ist die radikalische (Co)Polymerisation in einem Lösungs- oder Verdünnungsmittel.

Die radikalische (Co)Polymerisation solcher Monomere erfolgt beispielsweise in wässrigem Medium in Gegenwart von Polymerisationsinitiatoren, die unter Polymerisationsbedingungen in Radikale zerfallen. Die (Co)Polymerisation kann in einem weiten Temperaturbereich, gegebenenfalls unter vermindertem oder auch unter erhöhtem Druck in der Regel bei Temperaturen bis zu 100°C vorgenommen werden. Der pH-Wert des Reaktionsgemisches wird gewöhnlich in dem Bereich von 4 bis 10 eingestellt.

Dabei wird das Monomer oder Monomerengemisch unter Verwendung radikalischer Polymerisationsinitiatoren, z.B.. in Radikale zerfallende Azoverbindungen, wie 2,2'-Azo-bis(isobutyronitril), 2,2'-Azobis-(2-amidinopropan)-hydrochlorid oder 4,4'-Azobis-(4'-cyan-pentansäure), (co)polymerisiert.

Die genannten Verbindungen werden meist in Form wässriger Lösungen eingesetzt, wobei die untere Konzentration durch die in der (Co)Polymerisation vertretbare Wassermenge und die obere Konzentration durch die Löslichkeit der betreffenden Verbindung im Lösungsmittel bestimmt ist. Im allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung.

Die Menge der Initiatoren beträgt im allgemeinen 0,1 bis 10 Gew.-%, bevorzugt 0,1 bis 5 Gew.-%, bezogen auf die zu (co)polymerisierenden Monomeren. Es können auch mehrere, verschiedene Initiatoren bei der (Co)Polymerisation Verwendung finden.

Als Lösungs- oder Verdünnungsmittel können dienen z.B. Wasser, Alkohole, wie Methanol, Ethanol, n- oder iso-Propanol, n- oder iso-Butanol, oder Ketone, wie Aceton, Ethylmethylketon, Diethylketon oder *iso*-Butylmethylketon.

Gegebenenfalls kann die (Co)Polymerisation in Gegenwart von Polymerisationsreglern, wie beispielsweise Hydroxylammoniumsalze, chlorierte Kohlenwasserstoffe und Thioverbindungen, wie z.B., tert.-Butylmercaptan, Thioglycolsäureethylacrylester, Mercaptoethynol, Mercaptopropyltrimethoxysilan, Dodecylmercaptan, tert.-Dodecylmercaptan oder Alkalimetallhypophosphite, durchgeführt werden. Bei der (Co)Polymerisation können diese Regler, z.B. in Mengen von 0 bis 0,8 Gew.-Teile, bezogen auf 100 Gew.-Teile der zu (co)polymerisierenden Monomeren, eingesetzt werden, durch die die Molmasse des entstehenden (Co)Polymers verringert wird.

Die Herstellung kann z.B. auch durch Lösungspolymerisation und anschließende Dispergierung in Wasser erfolgen.

Bei der Durchführung der Polymerisation als Emulsions- oder Suspensionspolymerisation werden ionische und/oder nicht-ionische Emulgatoren und/oder Schutzkolloide bzw. Stabilisatoren als grenzflächenaktive Verbindungen verwendet.

Je nach Polymerisationsbedingungen erhält man bei der (Co)Polymerisation (Co)Polymerisate oder gegebenenfalls vernetzte Partikel eines unterschiedlichen Molekulargewichtes. (Co)Polymerisate mit einem hohen Molekulargewicht werden vorzugsweise durch (Co)Polymerisieren der Monomere in Wasser hergestellt. (Co)Polymerisate mit hohen Molekulargewichten erhält man darüberhinaus beispielsweise durch (Co)Polymerisieren der Monomeren in Form der umgekehrten Suspensionspolymerisation oder durch (Co)Polymerisieren der Monomeren nach dem Verfahren der Wasser-in-Öl-Polymerisation.

Bei dem Verfahren der umgekehrten Suspensionspolymerisation sowie der Wasser-in-Öl-Polymerisation verwendet man als Ölphase gesättigte Kohlenwasserstoffe, beispielsweise Hexan, Heptan, Cyclohexan, Dekalin oder aromatische Kohlenwasserstoffe, wie Benzol, Toluol, Xylol und Cumol. Das Verhältnis von Ölphase zu wässriger Phase beträgt bei der umgekehrten Suspensionspolymerisation beispielsweise 10 : 1 bis 1 : 10.

(Co)Polymerisat mit einem niedrigen Molekulargewicht erhält man, wenn man die (Co)Polymerisation in Gegenwart von Polymerisationsreglern oder in einem Lösungsmittel durchführt, das die (Co)Polymerisation regelt, z.B. Alkohole, wie Methanol, Ethanol, n- oder iso-Propanol, oder Ketone, wie Aceton, Ethylmethylketon, Diethylketon oder *iso*-Butylmethylketon.

(Co)Polymere mit niedrigen Molekulargewichten erhält man weiterhin mit Hilfe der üblichen Methoden, d.h. Einsatz größerer Mengen an Polymerisationsinitiator oder Verwendung von Polymerisationsreglern oder Kombinationen der genannten Maßnahmen.

Bevorzugt als (Co)polymere sind solche mit einem mittleren Molekulargewicht M_{w} von mehr als 20000, besonders bevorzugt mehr als 50000 (M_{w} bestimmt durch Gelpermeationschromatographie mit Polystyrol als Standard und Tetrahydrofuran als Elutionsmittel).

Bei der Emulsionspolymerisation werden ionische und/oder nichtionische Emulgatoren und/oder Schutzkolloide bzw. Stabilisatoren als grenzflächenaktive Verbindungen verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewicht im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z.B. ethoxylierte Fettalkohole (EO-Grad: 3 bis 50, Alkylrest: C₈- bis C₁₈), ethoxylierte Mono-, Di- und Tri-Alkylphenole (EO-Grad: 3 bis 50, Alkylrest: C₄- bis C₉), Alkalimetallsalze von Dialkylestern der Sulfobernsteinsäure sowie Alkali- und Ammoniumsalze von Alkylsulfaten (Alkylrest: C₈- bis C₁₈), von ethoxylierten Alkanolen (EO-Grad: 4 bis 30, Alkylrest: C₁₂- bis C₁₈), von ethoxylierten Alkylphenolen (EO-Grad: 3 bis 50, Alkylrest: C₄- bis C₉), von Alkylsulfonsäuren (Alkylrest: C₁₂- bis C₁₈) und von Alkylarylsulfonsäuren (Alkylrest: C₉- bis C₁₈).

Bevorzugt werden Sulfonate, Sulfate und Carboxylate mit entsprechenden Metallionen als Gegenionen.

Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208.

Handelsnamen von Emulgatoren sind z.B. Dowfax®2 A1, Emulan® NP 50, Dextrol® OC 50, Emulgator 825, Emulgator 825 S, Emulan® OG, Texapon® NSO, Nekanil® 904 S, Lumiten® I-RA, Lumiten E 3065, Disponil FES 77, Lutensol AT 18, Steinapol VSL, Emulphor NPS 25.

Die grenzflächenaktive Substanz wird üblicherweise in Mengen von 0,1 bis 20 Gew.-%, bevorzugt 1 bis 20 und besonders bevorzugt 1,5 bis 10 Gew.-% bezogen auf die zu polymerisierenden Monomeren verwendet.

Wasserlösliche Initiatoren für die Emulsionspolymerisation sind z.B. Ammonium- und Alkalimetallsalze der Peroxidischwefelsäure, z.B. Natriumperoxodisulfat, Wasserstoffperoxid oder organische Peroxide, z.B. tert-Butylhydroperoxid.

Geeignet sich insbesondere sogenannte Reduktions-Oxidations-(Redox)-Initiator Systeme.

Die Red-Ox-Initiator-Systeme bestehen aus mindestens einem meist anorganischen Reduktionsmittel und einem anorganischen oder organischen Oxidationsmittel.

Bei der Oxidationskomponente handelt es sich z.B. um die bereits vorstehend genannten Initiatoren für die Emulsionspolymerisation.

Bei der Reduktionskomponenten handelt es sich z.B. um Alkalimetallsalze der schwefligen Säure, wie z.B. Natriumsulfit, Natriumhydrogensulfit, Alkalisalze der Dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden.

Übliche Red-Ox-Initiator-Systeme sind z.B. Ascorbinsäure/Eisen(II)sulfat/Natriumperoxidisulfat, tert-Butylhydroperoxid/Natriumdisulfit, tert-Butylhydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit.

Die genannten Verbindungen werden meist in Form wässriger Lösungen oder Emulsionen eingesetzt, wobei die untere Konzentration durch die in der Dispersion vertretbare Wassermenge und die obere Konzentration durch die Löslichkeit der betreffenden Verbindung in Wasser bestimmt ist. Im allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung.

Die Menge der Initiatoren beträgt im allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Bei der Polymerisation können Regler eingesetzt werden, z.B. in Mengen von 0 bis 0,8 Gew.-Teile, bezogen auf 100 Gew.-Teile der zu polymerisierenden Monomeren, durch die die Molmasse verringert wird. Geeignet sind z.B. Verbindungen mit einer Thiolgruppe wie tert.-Butylmercaptan, Thioglycolsäureethylacrylester, Mercaptoethynol, Mercaptopropyltrimethoxysilan oder tert.-Dodecylmercaptan.

Die Emulsionspolymerisation erfolgt in der Regel bei 30 bis 130, vorzugsweise 50 bis 95°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozess als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z.B. zur besseren Einstellung der Teilchengröße eine Polymersaat, beispielsweise 0,1 - 3 Gew.-%. vorgelegt werden.

Die Art und Weise, in der der Initiator im Verlauf der radikalischen wässrigen Emulsionspolymerisation dem Polymerisationsgefäß zugegeben wird, ist dem-Durchschnittsfachmann bekannt. Es kann sowohl vollständig in das Polymerisationsgefäß vorgelegt, als auch nach Maßgabe seines Verbrauchers im Verlauf der radikalischen wässrigen Emulsionspolymerisation kontinuierlich oder stufenweise eingesetzt werden. Im einzelnen hängt dies von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt.

Zur Entfernung der Restmonomeren wird üblicherweise auch nach dem Ende der eigentlichen Emulsionspolymerisation, d.h. nach einem Umsatz der Monomeren von mindestens 95 %, Initiator zugesetzt.

Die einzelnen Komponenten können dem Reaktor beim Zulaufverfahren von oben, in der Seite oder von unten durch den Reaktorboden zugegeben werden.

Bei der Emulsionspolymerisation werden wässrige Dispersionen des Polymeren in der Regel mit Feststoffgehalten von 15 bis 75 Gew.-%, bevorzugt von 40 bis 75 Gew.-% erhalten.

Für eine hohe Raum/Zeitausbeute des Reaktors sind Dispersionen mit einem möglichst hohen Feststoffgehalt bevorzugt. Um Feststoffgehalte >60 Gew.-% erreichen zu können, sollte man eine bi- oder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengeneration/en kann zu einem beliebigen Zeitpunkt erfolgen. Er richtet sich nach den für eine niedrige Viskosität angestrebten Teilchengrößenverteilung.

Das Copolymerisat wird vorzugsweise in Form seiner wässrigen Dispersion verwendet.

Wird die Polymerisation in Gegenwart eines Saatlatex ausgeführt, so wird eine solche Saat nicht bei der Anzahl der Polymere, die das Polymerteilchen bilden, mitgezählt.

Die Polymerteilchen weisen bevorzugt mittlere Teilchengrößen von 100 - 500 nm, besonders bevorzugt 100 - 250 nm auf, wobei die Teilchengrößenverteilung ganz besonders bevorzugt monomodal ist.

Die Teilchen können homogen oder heterogen aufgebaut sein. Bei einem heterogenen Aufbau können ein Kern und eine oder mehrere Schalen vorliegen.

Falls die Teilchen aus Kern und mindestens einer Hülle aufgebaut sind, so sollten Kern und Hülle(n) möglichst ähnliche Brechungsindices aufweisen, um eine erhöhte Transparenz aufzuweisen. Bevorzugt beträgt die Differenz nicht mehr als 0,1, besonders bevorzugt nicht mehr als 0,075 und ganz besonders bevorzugt nicht mehr als 0,05.

Die erfindungsgemäßen Polymerdispersionen sind erhältlich durch chemische und/oder physikalische Desodorierung (Nachbehandlung) der Dispersionen a) und anschließender Einarbeitung des multifunktionellen (Meth)acrylates b). Gleichzeitig wird ein Verfahren zur Herstellung der erfindungsgemäßen Polymerdispersionen offenbart, indem die Dispersionen a) chemisch und/oder physikalisch desodoriert werden und anschließend b) eingearbeitet wird.

Zur Reduktion von Restmonomeren schließt sich an die Polymerisationsreaktion eine chemische und/oder physikalische Desodorierung der Dispersion a), bevorzugt eine chemische an.

Eine physikalische Desodorierung kann darin bestehen, daß die Dispersion mit Wasserdampf, einem sauerstoffhaltigen Gas, bevorzugt Luft, Stickstoff oder überkritischem Kohlendioxid beispielsweise in einem Rührbehälter, wie in der DE-AS 12 48 943 beschrieben, oder in einer Gegenstromkolonne, wie in der DE-A 196 21 027 beschrieben, gestrippt wird.

Abhängig von der Menge und den Siedepunkten der abzutrennenden Komponenten erfolgt die Desodorierung ein- oder mehrstufig. In der Regel werden dabei die flüchtigen Bestandteile mit einem Siedepunkt bei Normaldruck bis etwa 200 °C weitgehend abgetrennt.

Dies kann mit einer chemischen Desodorierung, d.h. einer Nachpolymerisierung durch Zugabe eines Initiators kombiniert werden, wie sie z.B. in der DE-A 198 28 183 beschrieben ist.

Als Oxidations- und Reduktionsmittel-Komponenten können beispielsweise organische oder anorganische Hydroperoxide, wie z.B. tert.-Butylhydroperoxid, Butylperoxid, Wasserstoffperoxid, Alkali- oder Erdalkalimetallpersulfate, -perborate oder -percarbonate, sowie Natrium Hydroxymethylsulfinat, Ascorbinsäure, Mohr'sches Salz usw., bevorzugt tert.-Butylhydroperoxid sowie Natrium Hydroxymethylsulfinat eingesetzt werden.

Die chemische Desodorierung erfolgt in der Regel bei einer Temperatur von 40 bis 90°C über ein Dauer von 15 Minuten bis 3 Stunden.

Dabei können beide Redox-Komponenten entweder gleichzeitig oder portionsweise zudosiert werden, oder eine Komponente kann teilweise oder vollständig vorgelegt und die restliche und/oder andere über einen Zeitraum von beispielsweise 5 bis 120 Minuten, bevorzugt 30 bis 90 und besonders bevorzugt 45 bis 75 Minuten zudosiert werden. Die Zudosierung kann kontinuierlich oder auch diskontinuierlich erfolgen.

Die eingesetzte Menge an Reduktions- bzw. Oxidationskomponente beträgt jeweils 0,01 - 0,5 Gew.%, bevorzugt 0,05 - 0,2 Gew.% bezogen auf die Polymermenge der zu desodorierenden Dispersion. Das Verhältnis der eingesetzten Menge an Reduktionskomponente zur Oxidationskomponente kann frei gewählt werden.

Nach der chemischen Desodorierung kann eine Neutralisation mit beispielsweise Natriumhydroxid, Kaliumhydroxid, Natriumhydrogencarbonat, Kaliumhydrogencarbonat, Natriumcarbonat, Kaliumcarbonat oder Kalkmilch auf den gewünschten pH von beispielsweise 6 bis 8, bevorzugt 6,5 bis 7,5 der Dispersion erfolgen.

Zur weiteren Entfernung von z.B. restlichen oxidierenden Bestandteilen kann weiteres Reduktionsmittel, das das gleiche oder ein anderes als das oben Genannte sein kann, in Mengen von 0,01 - 0,5 Gew.%, bevorzugt 0,01 - 0,2 Gew.% bezogen auf die Polymermenge der zu desodorierenden Dispersion zugesetzt werden, so daß das Reduktionsmittel als Gesamtmenge im Überschuss gegenüber dem Oxidationsmittel eingesetzt wird. Dieses weitere Reduktionsmittel kann aus folgenden Komponenten ausgewählt werden: Natrium Hydroxymethylsulfinat, Ascorbinsäure, Mohr'sches Salz usw. Bevorzugt wird Ascorbinsäure eingesetzt.

Nach einer erfolgten Desodorierung beträgt der Gehalt an Rest-Monomeren in der Regel nicht mehr als 300 ppm.

Dabei wurde überraschend gefunden, daß durch die chemische Desodorierung eine erhöhte Lagerstabilität der mit dem multifunktionellen (Meth)acrylat b) abgemischten Dispersion (siehe unten) erzielt werden konnte.

Multifunktionelle (Meth)acrylate b) sind solche Verbindungen, die mindestens 2, bevorzugt 3 - 10, besonders bevorzugt 3 - 6, ganz besonders bevorzugt 3 - 4 und insbesondere 3 (Meth)acrylatgruppen, bevorzugt Acrylatgruppen tragen.

Dies können beispielsweise Ester der (Meth)acrylsäure mit entsprechend mindestens zweiwertigen Polyalkoholen sein.

Derartige Polyalkohole sind beispielsweise mindestens zweiwertige Polyole, Polyether- oder Polyesterole oder Polyacrylatpolyole mit einer mittleren OH-Funktionalität von mindestens 2, bevorzugt 3 bis 10, geeignet.

Mindestens zweiwertige Polyalkohole sind beispielsweise 1,2-Propandiol, Ethylenglykol, 2,2-Dimethyl-1,2-Ethandiol, 1,3-Propandiol, 1,2-Butandiol, 1,4-Butandiol, 3-Methylpentan-1,5-diol, 2-Ethylhexan-1,3-diol, 2,4-Diethyloctan-1,3-diol, 1,6-Hexandiol, Poly-THF mit einer Molmasse zwischen 162 und 378, Poly-1,3-propandiol mit einer Molmasse zwischen 134 und 598, Poly-1,2-propandiol mit einer Molmasse zwischen 134 und 598, Polyethylenglykol mit einer Molmasse zwischen 106 und 458, Neopentylglykol, Hydroxypivalinsäureneopentylglykolester, 2-Ethyl-1,3-Propandiol, 2-Methyl-1,3-Propandiol, 2-Ethyl-1,3-Hexandiol, 2,2-Bis(4-hydroxycyclohexyl)propan, 1,1-, 1,2-, 1,3- und 1,4-Cyclohexandimethanol, 1,2-, 1,3- oder 1,4-Cyclohexandiol, Trimethylolbutan, Trimethylolpropan, Trimethylolethan, Neopentylglykol, Pentaerythrit, Glycerin, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit oder Isomalt.

Weitere geeignete mindestens zweiwertige Polyalkohole sind alkoxylierte Polyalkohole.

Geeignete Alkylenoxide sind beispielsweise Ethylenoxid, Propylenoxid, *iso*-Butylenoxid, Vinyloxiran und/oder Styroloxid.

Die Alkylenoxidkette kann bevorzugt aus Ethylenoxid-, Propylenoxid- und/oder Butylenoxideinheiten zusammengesetzt sein. Eine solche Kette kann sich aus einer Spezies eines Alkylenoxides oder aus einem Gemisch von Alkylenoxiden zusammensetzen. Wird ein Gemisch verwendet, können die unterschiedlichen Alkylenoxideinheiten statistisch oder als Block oder Blöcke einzelner Spezies vorliegen. Bevorzugt ist als Alkylenoxid Ethylenoxid, Propylenoxid oder ein Gemisch daraus, besonders bevorzugt ist es Ethylenoxid oder Propylenoxid und ganz besonders bevorzugt Ethylenoxid.

Die Anzahl der Alkylenoxideinheiten in der Kette beträgt beispielsweise 1 bis 20, bevorzugt 1 bis 10, besonders bevorzugt 1 - 5 und insbesondere 1 - 3 und außergewöhnlich bevorzugt 1, bezogen auf die jeweiligen Hydroxygruppen des Polyalkohols.

Als Startalkohole kommen die oben genannten mindestens zweiwertigen Polyalkohole in Betracht.

Als Polyesterole kommen z.B. solche in Betracht, wie sie durch Veresterung von Polycarbonsäuren, vorzugsweise Dicarbonsäuren, mit Diolen und mindestens einem der oben genannten Polyalkohole hergestellt werden können.

Die Ausgangsstoffe für solche Polyesterole sind dem Fachmann bekannt. Bevorzugt können als Polycarbonsäuren Oxalsäure, Maleinsäure, Fumarsäure, Bernsteinsäure, Glutarsäure, Adipinsäure, Sebacinsäure, Dodekandisäure,-o-Phthalsäure, Isophthalsäure, Terephthalsäure, Trimellithsäure, Azelainsäure, 1,4-Cyclohexandicarbonsäure oder Tetrahydrophthalsäure, deren Isomere und Hydrierungsprodukte sowie veresterbare Derivate, wie Anhydride oder Dialkylester, beispielsweise C₁-C₄-Alkylester, bevorzugt Methyl-, Ethyl- oder n-Butylester, der genannten Säuren eingesetzt werden.

Als Hydroxygruppen tragende Carbonsäuren oder Lactone kommen 4-Hydroxybenzoesäure, 6-Hydroxy-2-naphthalinsäure, Pivalolacton oder ε-Caprolacton in Betracht.

Als Diole kommen in Betracht Poly-THF mit einer Molmasse zwischen 162 und 738, Poly-1,2- oder -1,3-propandiol mit einer Molmasse zwischen 134 und 598, Polyethylenglykol mit einer Molmasse zwischen 106 und 458, 3-Methylpentan-1,5-diol, 2-Ethylhexan-1,3-diol, 2,4-Diethyloctan-1,3-diol, 1,6-Hexandiol, 1,4-Butandiol, Hydroxypivalinsäureneopentylglykolester, 2-Ethyl-1,3-Propandiol, 2-Methyl-1,3-Propandiol, 2-Ethyl-1,3-Hexandiol, 2,2-Bis(4-hydroxycyclohexyl)propan, 1,1-, 1,2-, 1,3- und 1,4-Cyclohexandimethanol, 1,2-, 1,3- oder 1,4-Cyclohexandiol.

Als Polyalkohol kommen die oben genannten mindestens zweiwertigen Alkohole, vorzugsweise Neopentylglykol, Trimethylolpropan, Trimethylolethan oder Pentaerythrit in Betracht.

Die Molekulargewichte Mₙ der Polyesterole bzw. Polyetherole liegen bevorzugt zwischen 100 und 4000 (Mₙ bestimmt durch Gelpermeationschromatographie mit Polystyrol als Standard und Tetrahydrofuran als Elutionsmittel).

Weitere multifunktionelle (Meth) acrylate b) können Polyester(meth)acrylate, Epoxy(meth)acrylate, Urethan(meth)acrylate oder (meth)acrylierte Polyacrylate sein. Anstelle der (Meth)acrylatgruppen können auch andere radikalisch oder kationisch polymerisierbare Gruppen eingesetzt werden.

Urethan(meth)acrylate sind z.B. erhältlich durch Umsetzung von Polyisocyanaten mit Hydroxyalkyl(meth)acrylaten oder -vinylethern und gegebenenfalls Kettenverlängerungsmitteln wie Diolen, Polyolen, Diaminen, Polyaminen oder Dithiolen oder Polythiolen. In Wasser ohne Zusatz von Emulgatoren dispergierbare Urethan(meth)-acrylate enthalten zusätzlich noch ionische und/oder nichtionische hydrophile Gruppen, welche z.B. durch Aufbaukomponenten wie Hydroxycarbonsäuren ins Urethan eingebracht werden.

Bevorzugte multifunktionelle (Meth)acrylate b) sind Trimethylolpropantriacrylat, Acrylate von ethoxyliertem und/oder propoxyliertem Trimethylolpropan, Pentaerythrit, Glycerin oder Di-Trimethylolpropan. Besonders bevorzugt sind Acrylate von ethoxyliertem und/oder propoxyliertem Trimethylolpropan oder Pentaerythrit.

In einer bevorzugten Ausführungsform wird das mindestens eine multifunktionelle (Meth)acrylat b) in die Dispersion, die die Polymerteilchen enthält, bei erhöhter Temperatur eingearbeitet, d.h. oberhalb von Raumtemperatur, bevorzugt oberhalb von 40°C, besonders bevorzugt bei einer Temperatur von 60 bis 100°C und ganz besonders bevorzugt bei 80 bis 90°C.

Die Menge an multifunktionellen (Meth)acrylaten b) wird so gewählt, daß die resultierende Abmischung eine Mindestfilmbildetemperatur von unterhalb von 20°C aufweist.

Der Feststoffgehalt der Dispersionen kann entsprechend der gewünschten Viskosität eingestellt werden, beispielsweise von 50 bis 500 mPas, und liegt im allgemeinen zwischen 20 und 80, insbesondere 30 und 70 Gew.-%.

Die erfindungsgemäßen Dispersionen können noch dem Fachmann an sich bekannte weitere Additive enthalten, beispielsweise Photoinitiatoren oder Additive.

Als Photoinitiatoren können dem Fachmann bekannte Photoinitiatoren verwendet werden, z.B. solche in "Advances in Polymer Science", Volume 14, Springer Berlin 1974 oder in K. K. Dietliker, Chemistry and Technology of UV- and EB-Formulation for Coatings, Inks and Paints, Volume 3; Photoinitiators for Free Radical and Cationic Polymerization, P.K T. Oldring (Eds), SITA Technology Ltd, London, genannten.

In Betracht kommen z.B. Mono- oder Bisacylphosphinoxide, wie sie z.B. in EP-A 7 508, EP-A 57 474, DE-A 196 18 720, EP-A 495 751 oder EP-A 615 980 beschrieben sind, beispielsweise 2,4,6-Trimethylbenzoyldiphenylphosphinoxid (Lucirin® TPO), Ethyl-2,4,6-trimethylbenzoylphenylphosphinat, Irgacure® 819 der Firma Ciba Spezialitätenchemie (Bis(2,4,6-Trimethylbenzoyl)phenylphosphinoxid), Benzophenone, Hydroxyacetophenone, Phenylglyoxylsäure und ihre Derivate oder Gemische dieser Photoinitiatoren. Als Beispiele seien genannt Benzophenon, Acetophenon, Acetonaphthochinon, Methylethylketon, Valerophenon, Hexanophenon, α-Phenylbutyrophenon, p-Morpholinopropiophenon, Dibenzosuberon, 4-Morpholinobenzophenon, 4-Morpholinodeoxybenzoin, p-Diacetylbenzol, 4-Aminobenzophenon, 4'-Methoxyacetophenon, β-Methylanthrachinon, *tert*-Butylanthrachinon, Anthrachinoncarbonysäureester, Benzaldehyd, α-Tetralon, 9-Acetylphenanthren, 2-Acetylphenanthren, 10-Thioxanthenon, 3-Acetylphenanthren, 3-Acetylindol, 9-Fluorenon, 1-Indanon, 1,3,4-Triacetylbenzol, Thioxanthen-9-on, Xanthen-9-on, 2,4-Dimethylthioxanthon, 2,4-Diethylthioxanthon, 2,4-Di-*iso*-propylthioxanthon, 2,4-Dichlorthioxanthon, Benzoin, Benzoin-*iso*-butylether, Chloroxanthenon, Benzoin-tetrahydropyranylether, Benzoin-methylether, Benzoin-ethylether, Benzoin-butylether, Benzoin-*iso*-propylether, 7-H-Benzoin-methylether, Benz[de]anthracen-7-on, 1-Naphthaldehyd, 4,4'-Bis(dimethylamino)benzophenon, 4-Phenylbenzophenon, 4-Chlorbenzophenon, Michlers Keton, 1-Acetonaphthon, 2-Acetonaphthon, 1-Benzoylcyclohexan-1-ol, 2-Hydroxy-2,2-dimethylacetophenon, 2,2-Dimethoxy-2-phenylacetophenon, 2,2-Diethoxy-2-phenylacetophenon, 1,1-Dichloracetophenon, 1-Hydroxyacetophenon, Acetophenondimethylketal, o-Methoxybenzophenon, Triphenylphosphin, Tri-o-Tolylphosphin, Benz [a] anthracen-7,12-dion, 2,2-Diethoxyacetophenon, Benzilketale, wie Benzildimethylketal, 2-Methyl-1-[4-(methylthio)phenyl]-2-morpholinopropan-1-on, Anthrachinone wie 2-Methylanthrachinon, 2-Ethylanthrachinon, 2-*tert*-Butylanthrachinon, 1-Chloranthrachinon, 2-Amylanthrachinon und 2,3-Butandion.

Geeignet sind auch nicht- oder wenig vergilbende Photoinitiatoren vom Phenylglyoxalsäureestertyp, wie in DE-A 198 26 712, DE-A 199 13 353 oder WO 98/33761 beschrieben.

Unter diesen bevorzugt sind die aufgeführten Acylphosphinoxide, Benzophenone, Hydroxyacetophenone und Phenylglyoxylsäuren.

Insbesondere können auch Gemische verschiedener Photoinitiatoren verwendet werden.

Es können auch einbaubare Photoinitiatoren eingesetzt werden. Einbaubare Photoinitiatoren tragen an der Photoinitiatorgrundstruktur über Spacergruppen gebunden polymerisierbare Gruppen. Solche einbaubaren Photoinitiatoren sind beispielsweise beschrieben in DE-A 195 24 812, EP-A 281 941, WO 00/24527. Bevorzugt sind unter diesen 4-Acryloxy-2'-chlorbenzophenon, 4-Acryloxy-3'-chlorbenzophenon, 4-Acryloxy-4'-chlorbenzophenon, 4-(6'-Acryloxy-2'-oxa-1'-oxo-hexyloxy)benzophenon oder 1,1-Dimethyl-1-hydroxy-4'-(2"-acryloxyethoxy)-acetophenon.

Die Photoinitiatoren können allein oder in Kombination mit einem Photopolymerisationspromotor, z.B. vom Benzoesäure-, Amin- oder ähnlichem Typ verwendet werden.

Bevorzugt sind Photoinitiatoren, die eine Acylphosphinoxid- oder eine Benzophenoneinheit enthalten.

Die Photoinitiatoren werden in der Regel in Mengen von 0,2 bis 10 Gew.-% zugegeben.

Als Additive können beispielsweise Antioxidantien, Oxidationsinhibitoren, Stabilisatoren, Aktivatoren (Beschleuniger), Füllmittel, Pigmente, Farbstoffe, Entgasungsmittel, Glanzmittel, antistatische Agentien, Flammschutzmittel, Verdicker, thixotrope Agentien, Verlaufshilfsmittel, Bindemittel, Antischaummittel, Duftstoffe, oberflächenaktive Agentien, Viskositätsmodifikatoren, Weichmacher, Plastifizierer, klebrigmachende Harze (Tackifier), Chelatbildner, Mattierungsmittel, Entschäumer oder Verträglichkeitsmittel (compatibilizer) verwendet werden.

Weiterhin können als Komponente ein oder mehrere photochemisch und/oder thermisch aktivierbare Initiatoren zugesetzt werden, z.B. Kaliumperoxodisulfat, Dibenzoylperoxid, Cyclohexanonperoxid, Di-tert.-Butylperoxid, Azobis-*iso-*butyronitril, Cyclohexylsulfonylacetylperoxid, Di-*iso-*propylpercarbonat, *tert*-Butylperoktoat oder Benzpinakol, sowie beispielsweise solche thermisch aktivierbare Initiatoren, die eine Halbwertszeit bei 80°C von mehr als 100 Stunden aufweisen, wie Di-t-Butylperoxid, Cumolhydroperoxid, Dicumylperoxid, t-Butylperbenzoat, silylierte Pinakole, die z.B. unter dem Handelsnamen ADDID 600 der Firma Wacker kommerziell erhältlich sind oder Hydroxygruppen-haltige Amin-N-Oxide, wie 2,2,6,6-Tetramethylpiperidin-N-oxyl, 4-Hydroxy-2,2,6,6-Tetramethylpiperidin-N-oxyl etc.

Weitere Beispiele geeigneter Initiatoren sind in "Polymer Handbook", 2. Aufl., Wiley & Sons, New York beschrieben.

Als Verdicker kommen neben radikalisch (co)polymerisierten (Co)Polymerisaten, übliche organische und anorganische Verdicker wie Hydroxymethylcellulose oder Bentonit in Betracht.

Als Chelatbildner können z.B. Ethylendiaminessigsäure und deren Salze sowie β-Diketone verwendet werden.

Geeignete Füllstoffe umfassen Silikate, z.B. durch Hydrolyse von Siliciumtetrachlorid erhältliche Silikate wie Aerosil® der Fa. Degussa, Kieselerde, Talkum, Ton, Glimmer, Aluminiumsilikate, Magnesiumsilikate, Calciumcarbonate, Calcium- und Bariumsulfate, Aluminiumhydroxide und -oxide etc. oder organische Füllstoffe, wie z.B. Polyacrylsäuren, beispielsweise mit einem Molgewicht zwischen 2000 und 300000, oder Cellulose.

Geeignete Stabilisatoren umfassen typische UV-Absorber wie Oxanilide, Triazine und Benzotriazol (letztere erhältlich als Tinuvin® -Marken der Ciba-Spezialitätenchemie) und Benzophenone. Diese können allein oder zusammen mit geeigneten Radikalfängern, beispielsweise sterisch gehinderten Aminen wie 2,2,6,6-Tetramethylpiperidin, 2,6-Di-tert.-butylpiperidin oder deren Derivaten, z.B. Bis-(2,2,6,6-tetra-methyl-4-piperidyl)sebacinat, eingesetzt werden. Stabilisatoren werden üblicherweise in Mengen von 0,1 bis 5,0 Gew.-%, bezogen auf die in der Zubereitung enthaltenen festen Komponenten, eingesetzt.

Weiterhin geeignete Stabilisatoren sind beispielsweise N-Oxyle, wie z.B. 4-Hydroxy-2,2,6,6-tetramethyl-piperidin-N-oxyl, 4-Oxo-2,2,6,6-tetramethyl-piperidin-N-oxyl, 4-Acetoxy-2,2,6,6-tetramethyl-piperidin-N-oxyl, 2,2,6,6-tetramethyl-piperidin-N-oxyl, 4,4',4 " -Tris(2,2,6,6-tetramethyl-piperidin-N-oxyl)-phosphit oder 3-Oxo-2,2,5,5-tetramethyl-pyrrolidin-N-oxyl, Phenole und Naphthole, wie z.B. p-Aminophenol, p-Nitrosophenol, 2-*tert*.-Butylphenol, 4-*tert*.-Butylphenol, 2,4-di-*tert*.-Butylphenol, 2-Methyl-4-*tert*.-Butylphenol, 4-Methyl-2,6-*tert*.-Butylphenol (2,6-*tert*.-Butyl-p-Kresol) oder 4-*tert*.-Butyl-2,6-dimethylphenol, Chinone, wie z.B. Hydrochinon oder Hydrochinonmonomethylether, aromatische Amine, wie z.B. N,N-Diphenylamin, N-Nitroso-diphenylamin, Phenylendiamine, wie z.B. N,N'-Dialkyl-para-phenylendiamin, wobei die Alkylreste gleich oder verschieden sein können und jeweils unabhängig voneinander aus 1 bis 4 Kohlenstoffatome bestehen und geradkettig oder verzweigt sein können, Hydroxylamine, wie z.B. N,N-Diethylhydroxylamin, Harnstoffderivate, wie z.B. Harnstoff oder Thioharnstoff, phosphorhaltige Verbindungen, wie z.B. Triphenylphosphin, Triphenylphosphit oder Triethylphosphit oder schwefelhaltige Verbindungen, wie z.B. Diphenylsulfid oder Phenothiazin.

Die erfindungsgemäßen Dispersionen, eignen sich besonders zum Beschichten von Substraten wie Papier, Pappe, Karton, Textil, Leder, Vlies, Kunststoffoberflächen, Holz, Glas, Keramik, mineralischen Baustoffen, wie Zement-Formsteine und Faserzementplatten, oder Metallen oder beschichteten Metallen, bevorzugt von Glas, Papier, Kunststoffen oder Metallen.

Die erfindungsgemäßen eignen sich besonders zum Beschichten von Papier und insbesondere zur Herstellung von Schleifpapier.

Die Beschichtung der Substrate erfolgt nach üblichen, dem Fachmann bekannten Verfahren, wobei man wenigstens eine erfindungsgemäße Dispersion auf das zu beschichtende Substrat in der ge-, wünschten Stärke aufbringt und die flüchtigen Bestandteile der Dispersionen, gegebenenfalls unter Erhitzen, entfernt. Dieser Vorgang kann gewünschtenfalls ein- oder mehrfach wiederholt werden. Das Aufbringen auf das Substrat kann in bekannter Weise, z.B. durch Spritzen, Spachteln, Rakeln, Bürsten, Rollen, Walzen oder Gießen erfolgen. Die Beschichtungsstärke liegt in der Regel in einem Bereich von etwa 3 bis 1000 g/m² und vorzugsweise 10 bis 200 g/m².

Weiterhin wird ein Verfahren zum Beschichten von Substraten offenbart, bei dem man die erfindungsgemäße Dispersionen, gegebenenfalls mit weiteren lacktypischen Additiven und thermisch härtbaren Harzen versetzt, auf das Substrat aufbringt und gegebenenfalls trocknet, mit Elektronenstrahlen oder UV Belichtung unter sauerstoffhaltiger Atmosphäre oder bevorzugt unter Inertgas härtet, gegebenenfalls bei Temperaturen bis zur Höhe der Trocknungstemperatur und anschließend bei Temperaturen bis zu 160°C, bevorzugt zwischen 60 und 160°C, thermisch behandelt.

Das Verfahren zum Beschichten von Substraten kann auch so durchgeführt werden, daß nach dem Aufbringen der erfindungsgemäßen Dispersionen zunächst bei Temperaturen bis zu 160°C, bevorzugt zwischen 60 und 160°C, thermisch behandelt und anschließend mit Elektronenstrahlen oder UV Belichtung unter Sauerstoff oder bevorzugt unter Inertgas gehärtet wird.

Die Härtung der auf dem Substrat gebildeten Filme kann gewünschtenfalls ausschließlich thermisch erfolgen. Im allgemeinen härtet man die Beschichtungen jedoch sowohl durch Bestrahlung mit energiereicher Strahlung als auch thermisch.

Gegebenenfalls kann, wenn mehrere Schichten des Beschichtungsmittels übereinander aufgetragen werden, nach jedem Beschichtungsvorgang eine thermische und/oder Strahlungshärtung erfolgen. Als Strahlungsquellen für die Strahlungshärtung geeignet sind z.B. Quecksilber-Niederdruckstrahler, -Mitteldruckstrahler mit Hochdruckstrahler sowie Leuchtstoffröhren, Impulsstrahler, Metallhalogenidstrahler, Elektronenblitzeinrichtungen, wodurch eine Strahlungshärtung ohne Photoinitiator möglich ist, oder Excimerstrahler. Die Strahlungshärtung erfolgt durch Einwirkung energiereicher Strahlung, also UV-Strahlung oder Tageslicht, vorzugsweise Licht im Wellenlängenbereich von λ = 200 bis 700 nm strahlt, besonders bevorzugt von λ = 200 bis 500 nm und ganz besonders, bevorzugt λ = 250 bis 400 nm, oder durch Bestrahlung mit energiereichen Elektronen (Elektronenstrahlung; 150 bis 300 keV). Als Strahlungsquellen dienen beispielsweise Hochdruckquecksilberdampflampen, Laser, gepulste Lampen (Blitzlicht), Halogenlampen oder Excimerstrahler. Die üblicherweise zur Vernetzung ausreichende Strahlungsdosis bei UV-Härtung liegt im Bereich von 80 bis 3000 mJ/cm².

Selbstverständlich sind auch mehrere Strahlungsquellen für die Härtung einsetzbar, z.B. zwei bis vier.

Diese können auch in jeweils unterschiedlichen Wellenlängebereichen strahlen.

Die Bestrahlung kann gegebenenfalls auch unter Ausschluss von Sauerstoff, z.B. unter Inertgas-Atmosphäre, durchgeführt werden. Als Inertgase eignen sich vorzugsweise Stickstoff, Edelgase, Kohlendioxid, oder Verbrennungsgase. Desweiteren kann die Bestrahlung erfolgen, indem die Beschichtungsmasse mit transparenten Medien abgedeckt wird. Transparente Medien sind z.B. Kunststofffolien, Glas oder Flüssigkeiten, z.B. Wasser. Besonders bevorzugt ist eine Bestrahlung in der Weise, wie sie in der DE-A1 199 57 900 beschrieben ist.

Die Härtung kann auch zusätzlich oder anstelle der thermischen Härtung durch NIR-Strahlung erfolgen, wobei als NIR-Strahlung hier elektromagnetische Strahlung im Wellenlängenbereich von 760 nm bis 2,5 µm, bevorzugt von 900 bis 1500 nm bezeichnet ist.

Gegebenenfalls kann, wenn mehrere Schichten des Beschichtungsmittels übereinander aufgetragen werden, nach jedem Beschichtungsvorgang eine thermische, NIR und/oder Strahlungshärtung erfolgen.

Ein weiterer Gegenstand der Erfindung ist ein Verfahren zur Beschichtung von Substraten, wobei man
i) ein Substrat mit einer Dispersion, wie zuvor beschrieben, beschichtet,
ii) flüchtige Bestandteile der Dispersion zur Filmbildung unter Bedingungen entfernt, bei denen der Photoinitiator im wesentlichen noch keine freien Radikale ausbildet,
iii) gegebenenfalls den in Schritt ii) gebildeten Film mit energiereicher Strahlung bestrahlt, wobei der Film vorgehärtet wird, und anschließend gegebenenfalls den mit dem vorgehärteten Film beschichteten Gegenstand mechanisch bearbeitet oder die Oberfläche des vorgehärteten Films mit einem anderen Substrat in Kontakt bringt,
iv) dem Film thermisch endhärtet

Dabei können die Schritte iv) und iii) auch in umgekehrter Reihenfolge durchgeführt, d.h. der Film kann zuerst thermisch und dann mit energiereicher Strahlung gehärtet werden.

Für die Herstellung von Schleifpapieren wird auf die noch nasse Beschichtung vor der Trocknung das Schleifmittel, beispielsweise Diamant, Granat, Bimsstein, Tripel, Siliciumcarbid, Schmirgel, Korund, Aluminiumoxide, Kieselgur, Sand (Schleifsande), Gips, Borcarbid, Boride, Carbide, Nitride oder Ceroxid, aufgeschleudert und danach erst getrocknet. Im Anschluss erfolgt die Strahlungshärtung. Die resultierenden Beschichtungen zeichnen sich durch sehr gute mechanische Eigenschaften, insbesondere eine hohe Oberflächenhärte aus.

In dieser Schrift verwendete ppm- und Prozentangaben beziehen sich, falls nicht anders angegeben, auf Gewichtsprozente und - ppm.

### Beispiele

In einem 2 1-Polymerisationsgefäß mit Rührer und Rückflusskühler wurden

| | |
|---|---|
| 445,0 g | entionisiertes Wasser und |
| 35,0 g | eines 33 gew.-%igen wässrigen Polymerlatex (hergestellt durch radikalisch initiierte Emulsionspolymerisation einer Monomerenmischung bestehend aus 100 Gew.-% Styrol; Polymerfeststoffgehalt 33 Gew.-%) mit einem gewichtsmittleren Teilchendurchmesser von 27 nm, |

vorgelegt und unter Rühren und Stickstoffatmosphäre auf 85°C erhitzt. Dann wurden 4,6 g von Zulauf III zugegeben. Anschließend wurden unter Rühren und Beibehaltung der Reaktionstemperatur gleichzeitig beginnend, der Rest von Zulauf III innerhalb 180 min und Zulauf I innerhalb 90 min dem Polymerisationsansatz kontinuierlich zudosiert. Nach Ende des Zulauf I wurde 60 min kontinuierlich Zulauf III weiter zudosiert und anschließend Zulauf II innerhalb 30 min zudosiert. Nach Ende von Zulauf II ließ man noch 30 min bei Reaktionstemperatur nachreagieren. Anschließend wurden gleichzeitig beginnend über 60 min zwei separate Zuläufe von 6,2 g einer 9,5 gew.-%igen wässrigen Lösung von tert.-Butylhydroperoxid sowie 38,0 g einer 2 gew.-%igen wässrigen Lösung von Natriumhydroxymethansulfinat kontinuierlich zudosiert. Nach Beendigung der Zuläufe wurde bei 85 °C der pH der Dispersion mit 14,2 g 25 gew.%-iger Natronlauge neutralisiert und anschließend 9,1 g einer 2,5 gew.%-igen wässrigen Lösung von Ascorbinsäure in 5 min zudosiert. Nach beendeter Zugabe wurden 344,5 g eines ethoxylierten Trimethylolpropantriacrylates (durchschnittlicher Ethoxylierungsgrad 1 je OH-Gruppe; stabilisiert mit 1 pphm (parts per hundred monomers, d.h. bezogen auf 100 Gew.-Teile Monomere) Hydrochinonmonomethylether und 0,1 pphm 2,4-Di-tert-butylphenol) über 40 min unter Rühren zudosiert. Dann kühlte man den Reaktionsansatz auf 20 bis 25°C (Raumtemperatur) ab, und filtrierte durch einen Perlonfilter mit 125 µm Maschenweite.

Zulauf I ist eine Emulsion hergestellt aus:

| | |
|---|---|
| 357,3 g | entionisiertem Wasser |
| 10,0 g | einer 20 gew.-%igen wässrigen Lösung eines Fettalkoholethoxylates (Alkylrest C₁₆-C₁₈; mittlerer Ethoxylierungsgrad 18) |
| 12,8 g | einer 45 gew.-%igen wässrigen Lösung von Dowfax® 2A1 |
| 5,7 g | Methacrylsäure (MAS) |
| 5,7 g | Butandioldiacrylat |
| 86,1 g | n-Butylacrylat (nBA) |
| 315,8 g | Methylmethacrylat (MMA) |

Zulauf II ist eine Emulsion hergestellt aus:

| | |
|---|---|
| 160,8 | g entionisiertem Wasser |
| 4,3 g | einer 20 gew.-%igen wässrigen Lösung eines Fettalkoholethoxylates (Alkylrest C₁₆-C₁₈; mittlerer Ethoxylierungsgrad 18) |
| 5,1 g | einer 45 gew.-%igen wässrigen Lösung von Dowfax® 2A1 |
| 11,5 g | Acrylsäure (AS) |
| 2,9 g | Butandioldiacrylat |
| 172,2 g | Methylmethacrylat (MMA) |

Zulauf III:

| | |
|---|---|
| 1,1 g | Ammoniumperoxodisulfat |
| 44,8 g | entionisiertes Wasser |

Die resultierende wässrige Dispersion wies einen Feststoffgehalt von 45,6 Gew.-% und einen pH-Wert von 7,4 auf.

### Vergleichsbeispiel 1

Die Herstellung des Vergleichsbeispiels erfolgt analog der Herstellung des Beispiel 1. Die Zusammensetzung der Zuläufe I und II ist folgendermaßen:
Zulauf I ist eine Emulsion hergestellt aus:

| | |
|---|---|
| 357,3 g | entionisiertem Wasser |
| 10,0 g | einer 20 gew.-%igen wässrigen Lösung eines Fettalkoholethoxylates (Alkylrest C₁₆-C₁₈; mittlerer Ethoxylierungsgrad 18) |
| 12,8 g | einer 45 gew.-%igen wässrigen Lösung von Dowfax® 2A1 |
| 5,7 g | Methacrylsäure (MAS) |
| 5,7 g | Butandioldiacrylat |
| 302,4 g | n-Butylacrylat (nBA) |
| 97,5 g | Methylmethacrylat (MMA) |

Zulauf II ist eine Emulsion hergestellt aus:

| | |
|---|---|
| 160,8 g | entionisiertem Wasser |
| 4,3 g | einer 20 gew.-%igen wässrigen Lösung eines Fettalkoholethoxylates (Alkylrest C₁₆-C₁₈; mittlerer Ethoxylierungsgrad 18) |
| 5,1 g | einer 45 gew.-%igen wässrigen Lösung von Dowfax® 2A1 |
| 11,5 g | Acrylsäure (AS) |
| 2,9 g | Butandioldiacrylat |
| 134,8 g | Methylmethacrylat (MMA) |
| 39,5 g | n-Butylacrylat (nBA) |

Die resultierende wässrige Dispersion wies einen Feststoffgehalt von 45,2 Gew.-% und einen pH-Wert von 7,4 auf.

### Analytik

Die Feststoffgehalte wurden bestimmt, indem eine aliquote Menge 6 Stunden bei 140°C in einem Trockenschrank getrocknet wurde. Es wurden jeweils zwei separate Messungen durchgeführt. Der in den jeweiligen Beispielen angegebene Wert stellt den Mittelwert der beiden Meßergebnisse dar.

Die pH-Werte wurden mit Hilfe einer Glaselektrode und einem pH-Meter Handylab1 der Firma Schott, geeicht auf Puffer der pH-Werte 4,0, 7,0 und 9,0, ermittelt.

### 2. Beschichtung

Die Dispersionen wurden mit 1,3 Gew.% Irgacure® 500 abgemischt. Anschließend wird das Substrat mit einem Rakel (200 µm nass) beschichtet, 15 min bei 60°C getrocknet und anschließend mit UV-Strahlung ausgehärtet.

Anwendungstechnische Eigenschaften:

| | Beispiel 1 | Vergleichsbeispiel 1 |
|---|---|---|
| Pendeldämpfung | | |
| vor UV-Härtung | 7 | 10 |
| nach UV-Härtung | 103 | 40 |
| Lagerstabilität bei 50°C | > 14 Tage | nicht bestimmt |
| Klebrigkeit vor Härtung | + | - |

Die Pendeldämpfung wurde nach DIN 53157 geprüft.

Zur-Lagerstabilitätsprüfung wurden 250 ml der Dispersion in einem geschlossenen Gefäß bei 50 °C gelagert. Das Kriterium der Lagerstabilität wurde erfüllt, wenn keine Phasenseparation und Viskositätsänderungen nach 14 Tagen beobachtet wurden.

Die Klebrigkeit der ungehärteten Beschichtungen wurde qualitativ bestimmt:

| | |
|---|---|
| klebfrei | = + |
| fast klebfrei | = 0 |
| klebrig | = - |

## Patentansprüche

1. Wässrige Polymerdispersionen, enthaltend
a) 50 - 70 Gew.-% Polymerteilchen, bestehend aus mindestens zwei unterschiedlichen (Co)polymeren mit Glasübergangstemperaturen jeweils oberhalb 50°C, welche aufgebaut sind aus
mind. 80 Gew.-% mindestens eines Hauptmonomeren,
0,1 - 10 Gew.-% mindestens eines Hilfsmonomeren, sowie
0 - 3 Gew.-% mindestens eines Vernetzermoleküls,
wobei die Differenz der Glasübergangstemperaturen (Tg) der unterschiedlichen Polymere mindestens 10°C beträgt, und
b) 30 - 50 Gew.-% mindestens eines multifunktionellen (Meth)acrylates,
wobei die Dispersion a) einer physikalischen und/oder chemischen Desodorierung unterworfen wird.

2. Polymerdispersionen nach Anspruch 1, **dadurch gekennzeichnet, daß** mindestens ein Hauptmonomer ausgewählt ist aus der Gruppe Methylmethacrylat, n-Butylacrylat und Ethylhexylacrylat.

3. Polymerdispersionen nach Anspruch 1 oder 2, **dadurch gekennzeichnet, daß** mindestens ein Hilfsmonomer ausgewählt ist aus der Gruppe Methacrylsäure, Acrylsäure, Acrylamid, (Meth)acrylsäure-2-hydroxyethylester, (Meth)acrylsäure-2-hydroxypropylester, (Meth)acrylsäure-3-hydroxypropylester, (Meth)acrylsäure-4-hydroxybutylester und 4-Hydroxybutylvinylether.

4. Polymerdispersionen nach einem der vorstehenden Ansprüche, **dadurch gekennzeichnet, daß** mindestens ein Vernetzermolekül ausgewählt ist aus der Gruppe 1,4-Butandioldiacrylat, Allylmethacrylat, Ethylenglykol(meth)acrylat, Propylenglykol(meth)acrylat, 1,6-Hexandioldi(meth)acrylat, 1,2-Ethylenglykoldi(meth)acrylat, 1,2-Neopentylglykoldi(meth)acrylat, Diethylenglykoldi(meth)acrylat, Triethylenglykoldi(meth)acrylat, Tetraethylenglykoldi(meth)acrylat, Trimethylolpropantri(meth)acrylat, Trimethylolethantri(meth)acrylat, Pentaerythritoltri- und -tetra(meth)acrylat und Divinylbenzol.

5. Polymerdispersionen nach einem der vorstehenden Ansprüche, **dadurch gekennzeichnet, daß** mindestens ein multifunktionelles (Meth)acrylat b) ausgewählt ist aus der Gruppe Trimethylolpropantriacrylat und Acrylate von ethoxyliertem und/oder propoxyliertem Trimethylolpropan oder Pentaerythrit.

6. Polymerdispersionen nach einem der vorstehenden Ansprüche, **dadurch gekennzeichnet, daß** das multifunktionelle (Meth)acrylat b) bei einer Temperatur oberhalb von 40 °C in die Dispersion eingearbeitet wird.

7. Polymerdispersionen nach einem der vorstehenden Ansprüche, **dadurch gekennzeichnet, daß** die Dispersion einer chemischen Desodorierung mit einem Oxidations- und Reduktionsmittel unterworfen wird.

8. Polymerdispersionen nach Anspruch 7, **dadurch gekennzeichnet, daß** das Reduktionsmittel als Gesamtmenge im Überschuss gegenüber dem Oxidationsmittel eingesetzt wird.

9. Polymerdispersionen nach Anspruch 7 oder 8, **dadurch gekennzeichnet, daß** zumindest ein Teil des Reduktionsmittels nach der Behandlung mit dem Oxidationsmittel zugegeben wird.

10. Verfahren zur Beschichtung von Substraten, **dadurch gekennzeichnet, daß** eine Polymerdispersion gemäß einem der Ansprüche 1 bis 9 eingesetzt wird.

11. Substrat, erhältlich durch Beschichtung mit einer Polymerdispersion gemäß einem der Ansprüche 1 bis 9.

12. Verwendung einer Polymerdispersion gemäß einem der Ansprüche 1 bis 9 zum Beschichten von Substraten.

## Claims

1. An aqueous polymer dispersion comprising
a) 50 - 70% by weight of polymer particles composed of at least two different (co)polymers having glass transition temperatures each above 50°C and synthesized from
at least 80% by weight of at least one principal monomer,
0.1 - 10% by weight of at least one auxiliary monomer, and
0 - 3% by weight of at least one crosslinker molecule,
the difference in the glass transition temperatures (Tg) of the different polymers being at least 10°C, and
b) 30 - 50% by weight of at least one polyfunctional (meth)acrylate,
the dispersion a) being subjected to physical and/or chemical deodorization.

2. The dispersion according to claim 1, wherein at least one principal monomer is selected from the group consisting of methyl methacrylate, n-butyl acrylate and ethylhexyl acrylate.

3. The dispersion according to claim 1 or 2, wherein at least one auxiliary monomer is selected from the group consisting of methacrylic acid, acrylic acid, acrylamide, 2-hydroxyethyl (meth)acrylate, 2-hydroxypropyl (meth)acrylate, 3-hydroxypropyl (meth)acrylate, 4-hydroxybutyl (meth)acrylate and 4-hydroxybutyl vinyl ether.

4. The dispersion according to any of the above claims, wherein at least one crosslinker molecule is selected from the group consisting of 1,4-butanediol diacrylate, allyl methacrylate, ethylene glycol (meth)acrylate, propylene glycol (meth)acrylate, 1,6-hexanediol di(meth)acrylate, 1,2-ethylene glycol di(meth)acrylate, 1,2-neopentyl glycol di(meth)acrylate, diethylene glycol di(meth)acrylate, triethylene glycol di(meth)acrylate, tetraethylene glycol di(meth)acrylate, trimethylolpropane tri(meth)acrylate, trimethylolethane tri(meth)acrylate, pentaerythritol tri(meth)acrylate and tetra(meth)acrylate and divinylbenzene.

5. The dispersion according to any of the above claims, wherein at least one polyfunctional (meth)acrylate b) is selected from the group consisting of trimethylolpropane triacrylate and acrylates of ethoxylated and/or propoxylated trimethylolpropane or pentaerythritol.

6. The dispersion according to any of the above claims, wherein the polyfunctional (meth)acrylate b) is incorporated into the dispersion at a temperature above 40°C.

7. The dispersion according to any of the above claims which is subjected to chemical deodorization with an oxidizing and reducing agent.

8. The dispersion according to claim 7, wherein the reducing agent is used as the whole amount in excess over the oxidizing agent.

9. The dispersion according to claim 7 or 8, wherein at least some of the reducing agent is added following treatment with the oxidizing agent.

10. A method of coating a substrate, which comprises using a polymer dispersion according to any of claims 1 to 9.

11. A substrate obtainable by coating with a polymer dispersion according to any of claims 1 to 9.

12. The use of a polymer dispersion according to any of claims 1 to 9 for coating substrates.

## Revendications

1. Dispersions aqueuses de polymère, contenant
a) 50-70 % en poids de particules de polymère, qui sont constituées d'au moins deux (co)polymères différents ayant chacun des températures de transition vitreuse supérieures à 50°C, et à base
d'au moins 80 % en poids d'au moins un monomère principal,
0,1-10 % en poids d'au moins un monomère auxiliaire, ainsi que
0-3 % en poids d'au moins une molécule d'agent de réticulation,
la différence entre les températures de transition vitreuse (Tg) des différents polymères étant d'au moins 10°C, et
b) 30-50 % en poids d'au moins un (méth)acrylate multifonctionnel,
la dispersion a) étant soumise à une désodorisation physique et/ou chimique.

2. Dispersions de polymère suivant la revendication 1, **caractérisées en ce qu'**au moins un monomère principal est choisi parmi le groupe du méthacrylate de méthyle, de l'acrylate de n-butyle et de l'acrylate d'éthylhexyle.

3. Dispersions de polymère suivant la revendication 1 ou 2, **caractérisées en ce qu'**au moins un monomère auxiliaire est choisi parmi le groupe de l'acide méthacrylique, de l'acide acrylique, de l'amide acrylique, du (méth)acrylate de 2-hydroxyéthyle, du (méth)acrylate de 2-hydroxypropyle, du (méth)acrylate de 3-hydroxypropyle, du (méth)acrylate de 4-hydroxybutyle et de l'éther 4-hydroxybutylvinylique.

4. Dispersions de polymère suivant l'une des revendications précédentes, **caractérisées en ce qu'**au moins une molécule d'agent de réticulation est choisie parmi le groupe du diacrylate de 1,4-butanediol, du méthacrylate d'allyle, du (méth)acrylate d'éthylèneglycol, du (méth)acrylate de propylèneglycol, du di(méth)acrylate de 1,6-hexanediol, du di(méth)acrylate de 1,2-éthylèneglycol, du di(méth)acrylate de 1,2-néopentylglycol, du di(méth)acrylate de diéthylèneglycol, du di(méth)acrylate de triéthylèneglycol, du di(méth)acrylate de tétraéthylèneglycol, du tri(méth)acrylate de triméthylolpropane, du tri(méth)acrylate de triméthyloléthane, du tri(méth)acrylate et tétra(méth)acrylate de pentaérythrite et du divinylbenzène.

5. Dispersions de polymère suivant l'une des revendications précédentes, **caractérisées en ce qu'**au moins un (méth)acrylate multifonctionnel b) est choisi parmi le groupe du triacrylate de triméthylolpropane et des acrylates de triméthylolpropane éthoxylés et/ou propoxylés ou de la pentaérythrite.

6. Dispersions de polymère suivant l'une des revendications précédentes, **caractérisées en ce que** le (méth)acrylate multifonctionnel b) est incorporé dans la dispersion à une température supérieure à 40°C.

7. Dispersions de polymère suivant l'une des revendications précédentes, **caractérisées en ce que** la dispersion est soumise à une désodorisation chimique avec un oxydant et un réducteur.

8. Dispersions de polymère suivant la revendication 7, **caractérisées en ce que** le réducteur est mis en oeuvre en tant que quantité globale en excès par rapport à l'oxydant.

9. Dispersions de polymère suivant la revendication 7 ou 8, **caractérisées en ce qu'**au moins une partie du réducteur est ajoutée avec l'oxydant, après le traitement.

10. Procédé de revêtement de substrats, **caractérisé en ce qu'**on met en oeuvre une dispersion de polymère suivant l'une des revendications 1 à 9.

11. Substrat que l'on peut obtenir par revêtement avec une dispersion de polymère suivant l'une des revendications 1 à 9.

12. Utilisation d'une dispersion de polymère suivant l'une des revendications 1 à 9, pour revêtir des substrats.
